# EUROPEAN PATENT SPECIFICATION

(11) **EP 2 628 676 B1**
(45) Date of publication and mention of the grant of the patent: **11.06.2014**
(21) Application number: 12155943.9
(22) Date of filing: 17.02.2012
(51) Int. Cl.: B63J 2/10

(54) **Air vent head**
Entlüftungskopf
Tête d'orifice d'aération

(43) Date of publication of application: 21.08.2013
(73) Proprietor: John Gjerde AS, 6083 Gjerdsvika (NO)
(72) Inventor: Sandvik, Maron Gunnar, 6076 Moltustranda (NO); Gjerde, Roger, 6084 Larsnes (NO)
(74) Representative: Plougmann & Vingtoft A/S

(56) References cited:
- GB-A- 253 696
- KR-B1- 100 852 524
- US-A- 3 869 967

## Description

### FIELD OF THE INVENTION

The present invention relates to a valve providing air ventilation in and out of ballast tanks in ships, and especially to an air vent head providing free flow of air in and out of ballast tanks while at the same time prevents seawater to enter uncontrollably into the ballast tanks via the air inlet.

### BACKGROUND OF THE INVENTION

The stability of a see going vessel is related to many factors provided for by the shape of the hull and other technical features of the ship providing a specific hydro dynamical behaviour. For example, it is common to be able to control stability and/or reduce rolling and heave of ships by controlling and adjusting water levels in ballast tanks. The added or reduced amount of water in ballast tanks will submerge or lift the centre of mass of the ship and therefore affect the stability as known to a person skilled in the art. The ballast tanks can for example be used to lift or submerge the ship, i.e. trimming the ship such that the most effective designed waterline of the ship is in use irrespective of the amount of cargo on board the ship.

In prior art it is also known to be able to use water filled tanks to reduce rolling and heave of the ships. When the ship is rolling back and forth for example to starboard side or port side, the water inside the tank will also move from side to side. If the water tank is arranged across the hull from one side to the other it is possible to adjust the water level such that the water will move back and forth in opposite directions of the rolling movement of the ship. For example, if the ship moves towards starboard side the water will move towards the port board side. The shift of the weight in the water moving in this direction will reduce the rolling movements towards the starboard side as known to a person skilled in the art.

There are also many other types of installations used in sea water that utilize ballast tanks for different reasons. For example, in ocean wave power plants water filled tanks may be used to stabilize an installation, but it is also known to use ballast tanks to trim hydro dynamical properties of for example floating bodies used in ocean wave power plants. The floating bodies are used to pick up the upward and downward movements of waves which are then converted to for example electric power. It is known that the natural frequency of an ocean power plant may be adjusted by weight adjustments of floating bodies to be coinciding with the frequency of the ocean wave system thereby increasing the amount of energy that can be converted from the wave energy (resonance).

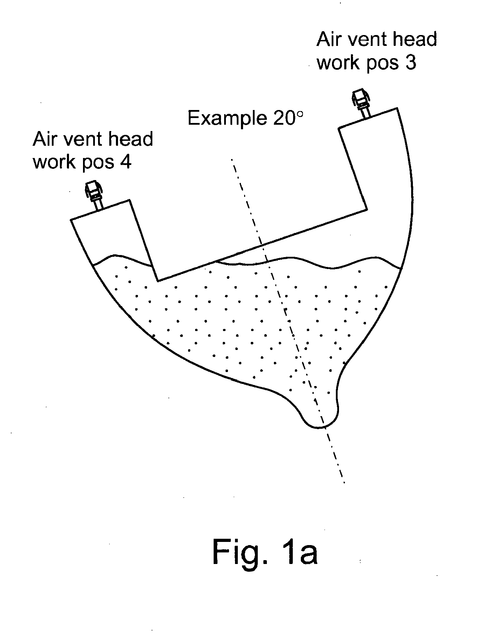

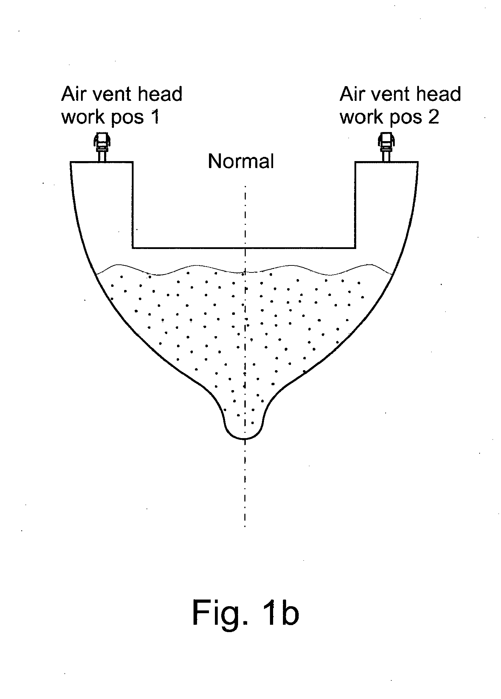

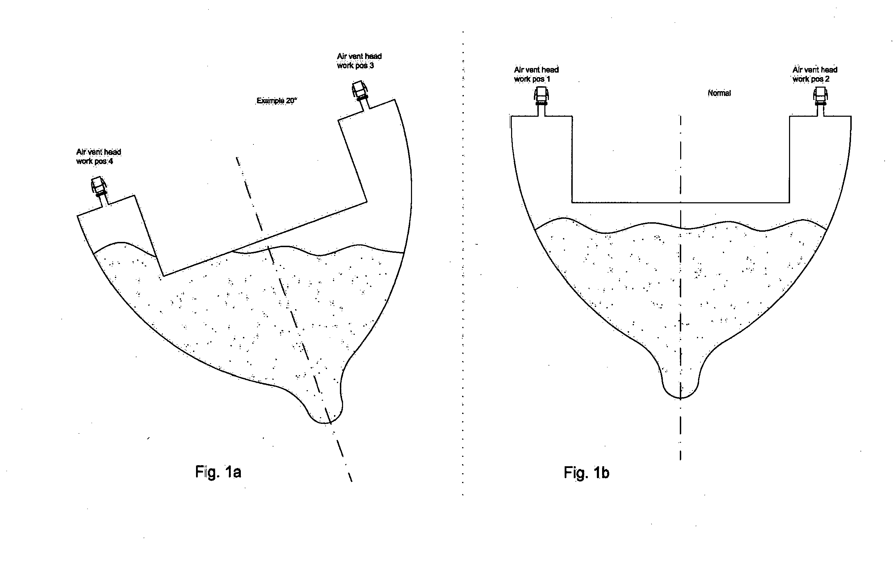

However, there are some practical challenges when using ballast tanks. Figure 1 illustrates a typical scenario when using a water filled ballast tank on board a ship. The ballast tank is a closed tank and when the water moves to one side as illustrated in figure 1a, it is easy to understand that air above the water level in the tank will be pushed upwardly on the left hand side of figure 1a and the pressure build up on this side can be huge. On the other side (the right hand side in figure 1a) it is generated a suction since the air volume increases (lower air pressure). These changes in air pressure conditions must be compensated for and therefore it is common to arrange air vent heads on each side of the ballast tank, for example on top of the weather deck and wherein the air vent heads are in fluid contact with the ballast tank via pipes.

One of the practical challenges with this arrangement is that water waves may flow over the weather deck and can enter the ballast tanks via the air vent head openings. This can be dangerous since added water in the ballast tank will influence the stability of the ship. As illustrated in figure 1b, the ship may be rather stable even if there are waves rolling over the weather deck. Then there will be at least two openings that can allow unwanted sea water to enter inside the ballast tank.

The technical problem is best illustrated with reference to the situation depicted in figure 1a. The air vent head is open to let air flow in and out of the ballast tank wherein the air flow direction is dependent on the movement back and forth of the ship. For example, on the right hand side of figure 1a the situation dictates that the air vent head must be open to let air flow into the ballast tank. This leaves an opening which again can cause seawater to enter the ballast tank. Therefore there must be a valve arranged inside the air vent head closing the opening if water is entering inside the air head vent from the inlet/outlet opening having contact to the surrounding environment on the weather deck, and otherwise the vent is to be open, i.e. when the water leaves the air vent head through the inlet/outlet opening the water came in through, the valve should open up again.

In prior art there are some examples of air vent heads that tries to solve the above described technical problem such as closest prior art document GB 253 696. The challenge is to let the valve distinguish between air and water. For example, with reference to the situation depicted on the right hand side of figure 1a, when air is flowing through the air vent head it should remain open. When water enters the air vent head it should close immediately. The known technique in prior art that is used to distinguish between water and air in this situation is to use the buoyancy of a floating body, wherein the buoyancy forces on the floating body will be distinctly different if the floating body is submerged in water or if it is floating in the air, i.e. the buoyancy forces on the floating body in water is used to lift the floating body towards the opening of the air vent head in fluid communication with the ballast tank and thereby closing the opening when the floating body reaches the opening. In theory, since the buoyancy forces on the floating body is much less in air, the floating body will not be lifted enough in air to close the opening in the air vent head in fluid communication with the ballast tank. This principle of distinguishing between air and water can only work within some specific limits because the air and water is also streaming through the air vent head and is not static. Therefore, aero dynamical properties as well as hydro dynamical properties of the floating body inside the air vent head must also be considered.

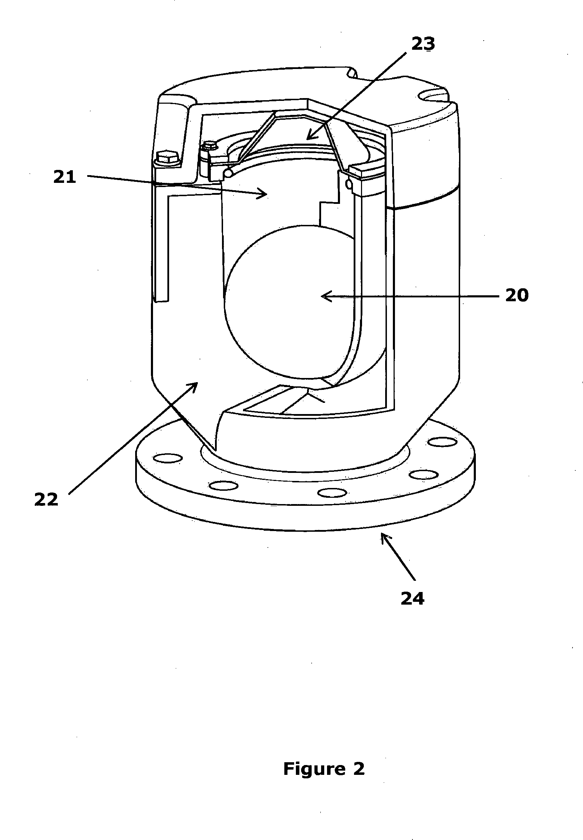

For example, the air vent head depicted in figure 2 is a model named WIN2000 commercial available by Winteb, disclosed on http://www.winteb.com/our-products/win2000-air-pipe-heads, comprising a ball shaped floating body 20 inside a cavity 21 in the air vent head body. A first inlet/outlet opening 22 may be in fluid communication with the open surrounding air and the cavity 21. A second inlet/outlet opening 24 (facing towards a weather deck) may be in fluid communication with the ballast tank via a pipe (not shown) arranged down to the ballast tank and to the cavity 21 via the opening 23 at the top side of the cavity 21. If water enters the first inlet/outlet opening 22 the ball shaped floating body 20 will be lifted towards the opening 23 and may close the opening 23. When the water retracts again through the inlet/outlet opening 22 the ball shaped floating body 20 will fall downwards and the opening 23 will be unblocked again. However, the ball shape of the floating body has some unwanted features with respect to laminar or turbulent flow of air passing the body. The round shape alters the air pressure when a laminar air stream passes the round shaped body. This effect is known from an air plane wing that has a rounded upper surface and a flat surface on the bottom side of the wing. The air pressure on the upper surface will decrease and the net effect is an uplift force from the pressure difference that can lift the airplane up in the air. The aero dynamic property of a ball shaped body exposed to streaming air is well known to be extremely complex and difficult to control. One consequence of the ball shaped floating body in the prior art solution disclosed in figure 2 is that the proper operation of the air vent head is limited by the velocity of the air streaming through the air vent head. With reference to figure 1 it is obvious that the air stream may be extremely high if there is an abrupt and large rolling of the ship. This can bring the speed of the air up to very high levels. The example of prior art air vent head WIN2000 disclosed in figure 2 has a typical air flow speed limit of 4m/s. Above this speed limit the ball shaped floating body is lifted and is closing the opening towards the ballast tank. When the forces are high (for example the suction) it is known that the ball shaped floating body can be jammed permanently or be broken by the forces from the air stream flow. This phenomenon is often referred to as "suction blocking."

There are some examples of improvements of this design concept in prior art. For example, the air vent head named Aero 1.1 manufactured by the applicant of the present invention uses a disc shaped floating body that can be lifted by the water and close the inlet/outlet opening in fluid communication with the ballast tank as discussed above. However, the disc shaped body has a rounded edge that permits laminar flow of air streaming around the shape of the body, and since the top surface and the bottom surfaces are parallel the uplift force from the flow of air itself is minimized. Further, the disc shaped body is guided up and down inside the cavity of the air vent head by a centered rod going through a center of the disc. Therefore this solution may operate at higher air speeds. However, the floating body is arranged with a larger diameter of the disc shaped body to be able to be lifted quickly by water entering the air vent head. Therefore the floating body is also resting up from the bottom of the air vent head to permit the water to flow beneath the floating body. This makes it also more probable that air flowing in the air vent head will lift the floating body. Therefore there is a similar air speed limit as discussed above for the proper operation of this solution. The air speed limit for the Aero 1.1 is typical 8 m/s.

However, it is known that the airspeed inside an air vent head can be several magnitudes larger in many practical situations a ship is encountering when sailing in open sea.

Hence, an improved air vent head would be advantageous, and in particular a more efficient and/or durable air vent head would be advantageous.

According to an aspect of the present invention as claimed by independent claims 1 and 7, an air vent head is provided for utilizing properties of turbulent fluid flow passing an example of embodiment of a floating body arranged inside a cavity of the air vent head, wherein a first inlet/outlet opening of the cavity is in fluid communication with the atmosphere, while another inlet/outlet opening of the cavity is in fluid communication with a closed and partly filled water tank. There is a known relationship called the Reynold number between friction forces and inert forces in streaming fluids. Turbulent fluid streams have a higher Reynold number compared to laminar fluid streams. When the Reynold number is high the dominant force in the fluid stream is the inert forces. This property is utilized by the present invention providing a stabilized localisation of the floating body inside the cavity when the floating body is subject to air streams around the floating body.

### OBJECT OF THE INVENTION

It is a further object of the present invention to provide an alternative to the prior art.

In particular, it may be seen as an object of the present invention to provide an air vent head that solves the above mentioned problems of the prior art with a shape of a floating body arranged inside the air vent head utilizing physical properties related to induced turbulent flow of air passing the floating body.

### SUMMARY OF THE INVENTION

Thus, the above described object and several other objects are intended to be obtained in a first aspect of the invention by providing a floating body comprising an upper section and a lower section, wherein the floating body is arranged inside a cavity of an air vent head, wherein the lower section of the floating body is facing towards an inlet/outlet opening of the air vent head in fluid communication with the atmosphere and the cavity, and wherein the upper section is facing towards an inlet/outlet opening in fluid communication with the cavity and a closed tank, wherein air flow streams entering the air vent head from the surrounding atmosphere passes the lower section of the floating body as a laminar type of air flow streams, and when the laminar air streams passes the upper section of the floating body a turbulence inducing arrangement located around the upper section of the floating body induces a turbulent air flow stream in a section of the cavity of the air vent head located between the upper section of the floating body and the inlet/outlet opening in fluid communication with the closed tank.

According to an example of embodiment of the present invention an air vent head comprises a cavity with a first opening in fluid communication with open air surrounding the air vent head and a second opening in fluid communication with a closed tank, wherein the cavity inside the air vent head is providing controlled fluid communication between the first opening and the second opening dependent on a position inside the cavity of a floating body arranged inside the cavity, the floating body comprises an upper section and a lower section, wherein the lower section is facing towards the first opening, wherein the second section is facing towards an opening arranged in a top surface of the cavity, wherein this opening provides a fluid communication channel between the cavity and the second opening, a surface of the lower section is arranged to provide a defined low value of the Reynold number for air flows passing the lower section while there is arranged a turbulence inducing arrangement in operational contact with the upper section providing an increase of the Reynold number in the air flows passing from the lower section via the upper section and into a part of the cavity surrounding the upper part of the floating body.

The invention is particularly, but not exclusively, advantageous for obtaining an air vent head for ballast tanks on board ships.

The different aspects of the present invention may each be combined with any of the other aspects. These and other aspects of the invention will be apparent from reading the disclosure and the attached referenced drawings.

### BRIEF DESCRIPTION OF THE FIGURES

The air vent head according to the present invention will now be described in more detail with regard to the accompanying figures. The figures illustrate an example of implementing the present invention and are not to be construed as being limiting to other possible embodiments falling within the scope of the attached claim set.
Figure 1 illustrates a prior art ballast tank arrangement.
Figure 2 illustrates an example of prior art air vent head.
Figure 3 illustrates an example of embodiment of the present invention.
Figure 4 illustrates some details of the embodiment in figure 3.
Figure 5 illustrates a cross section of an example of embodiment of the present invention.
Figure 6 illustrates another position of the floating body depicted in figure 5.
Figure 7 illustrates some non-limiting dimensions of an example of embodiment of the present invention.
Figure 8 illustrates an example of embodiment of a floating body according to the present invention.

### DETAILED DESCRIPTION OF AN EMBODIMENT

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

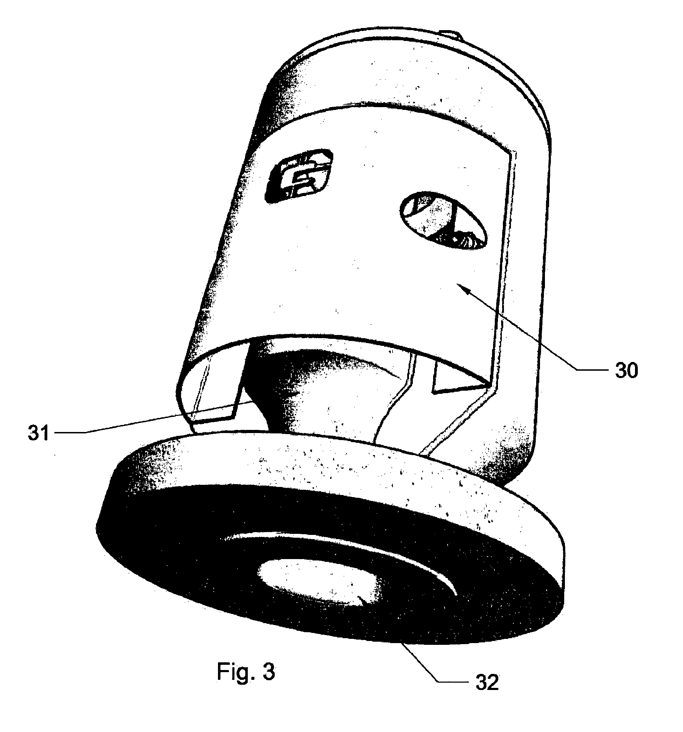

Figure 3 illustrates an example of embodiment of the present invention depicting an outer appearance of the example of embodiment of an air vent head. The air vent head may be located on a weather deck of a ship wherein the surface of the air vent head comprising an inlet/outlet opening 32 is facing towards the surface of the weather deck. The inlet/outlet opening 32 may be in fluid contact with a ballast tank via a pipe attached to the bottom surface of the air vent head. A cover plate 30 protects an inlet/outlet opening 31 of the air vent head in fluid communication with the open air. The cover plate 30 may also serve to stop rolling waves hitting the air vent head opening 31 thereby reducing the possible amount of water that may enter the inlet/out opening 31.

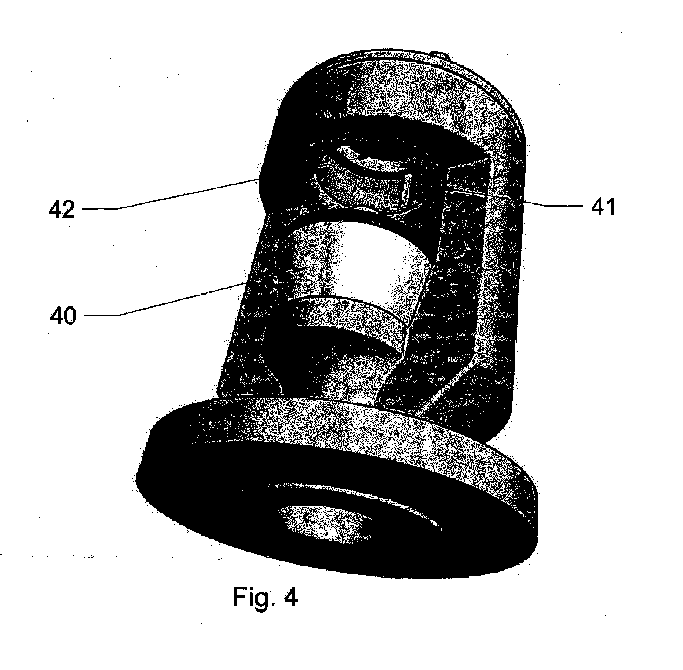

Figure 4 illustrates the same example of embodiment as depicted in figure 3 but with the cover plate 30 removed. A floating body 40 arranged inside a cavity 41 is then visible. The inlet/outlet opening 32 in figure 3 has a fluid communication channel in the back of the body of the air vent head that ends up in the opening 42 disclosed in figure 4. The floating body 40 has lower mass density than water and if the floating body 40 is lifted due to buoyancy forces from water entering the internal cavity 41 of the air vent head via the opening 31, the floating body 40 is lifted upwards and may close the opening 42. If the water inside the cavity 41 retracts out of the inlet/outlet opening 31 in fluid communication with the open air, the floating body 40 will fall downwards thereby unblocking the opening 42.

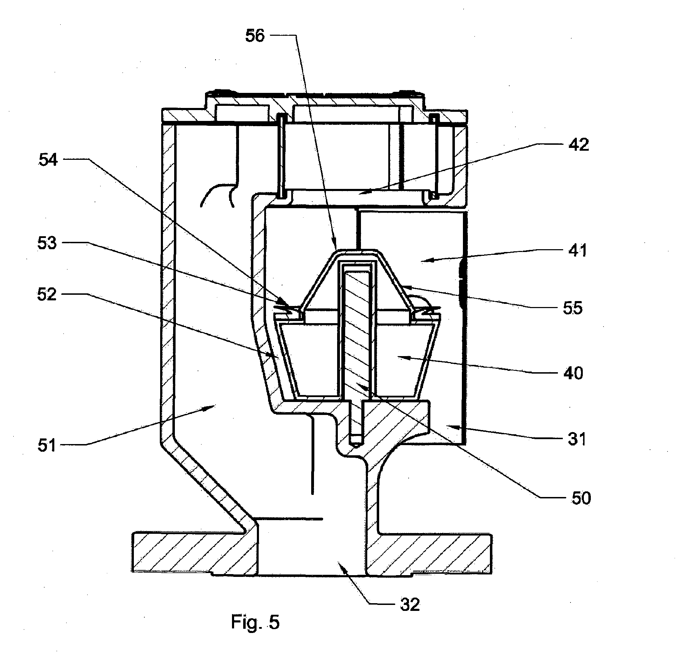

Figure 5 illustrates a cross section of the example of embodiment illustrated in figure 3 and figure 4. The floating body 40 is arranged inside the cavity 41 and movements up and down of the floating body 40 is guided by a rod 50 located inside the body of the floating body but attached externally to a bottom surface of the cavity 41.

When air is streaming from the open air into the internal cavity 41 via the inlet/outlet opening 31 the air stream is a relative laminar type of air stream. As depicted in figure 5, there is for example a possible geometric relationship between the wall section 53 of the internal cavity 41 and side faces of the floating body 40 facing towards the side wall 53. As can be seen, the wall 53 runs in parallel but with a distance from the side face of the floating body 40. This ensures that air flow streams passing this section of the floating body from the inlet/outlet 31 is a laminar type of air stream. This is just an example of an embodiment enhancing this effect. Other examples of embodiments are within the scope of the present invention.

However, when the laminar type of air stream passes for example an indent 54 arranged in the side face of the floating body an arranged sharp edge 55 of the indent 54 may induce turbulence into the air stream. The change from laminar air stream along a lower section 52 of the floating body 40 to a turbulent air stream along an upper section 56 of the floating body 40 has some distinct effects on the behaviour of the floating body 40 subject to the air flow streaming inside the cavity 41. As known to a person skilled in the art, turbulent air streams are characterized by having a higher Reynold number compared to the laminar air stream for example found along the lower section 52 of the floating body 40. Because of the change of value of the Reynold number in the air space in the cavity 41 located around the upper section 56 of the floating body 40, the dominant force will be an inert force from the air stream acting on the upper surface 56 of the floating body 40 making it difficult for the floating body 40 to move upwards in the air stream. The effect is therefore that air streams passing the floating body 40 from the inlet/outlet 31 and upwards in the cavity 40 do not lift the floating body 40 towards the opening 42 as may happen compared with the cited prior art solutions.

In this example of embodiment it is the sharp edge 55 of the indent 54 that induces the turbulence in the air stream passing the edge 55. This is an example of a turbulence inducing arrangement according to the present invention. However, it is within the scope of the present invention to use any shape or carving in a side face of the floating body that may induce turbulence as the turbulence inducing arrangement. It is further within the scope of the present invention that a turbulence inducing arrangement may be located on a section of the side walls of the cavity 41 of the air vent head being in operational contact with the upper section 56 of the floating body 40, i. e. induces the required increase in the Reynold number in the cavity 40 above the floating body 40.

The floating body 40 may be arranged with a body being hollow providing a buoyancy if water enters the cavity 41 via the inlet/outlet opening 31. Generally, the mass density of the floating body 40 should be lower than the mass density of water.

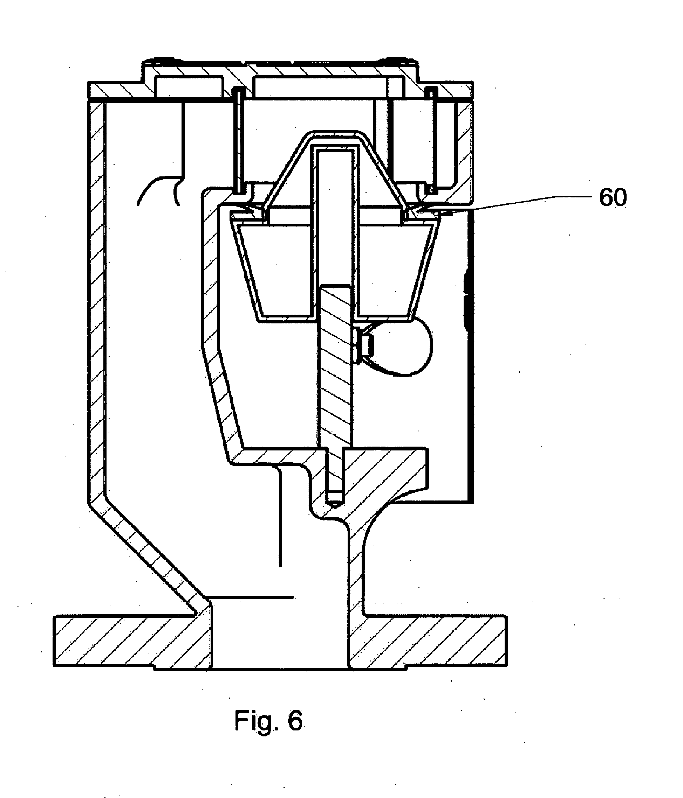

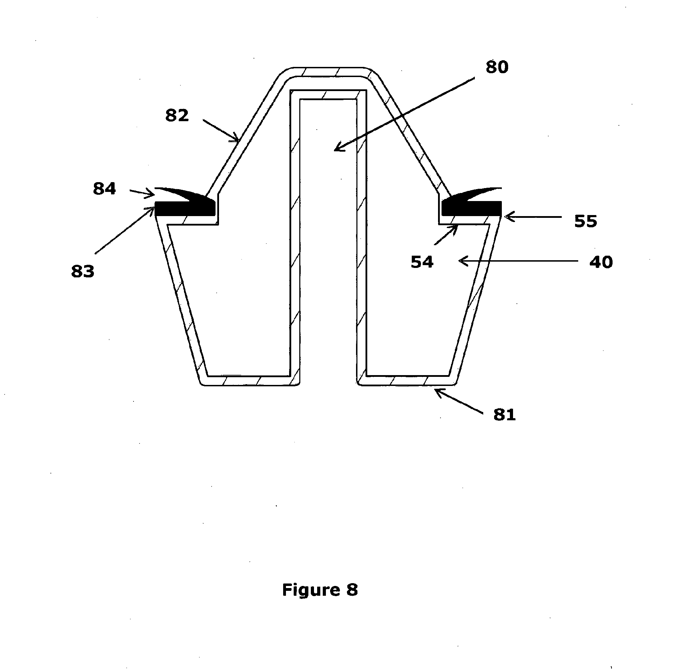

In another example of embodiment of the present invention, there is arranged a rubber sealing member 60, 83 on top of the indent surface 54 of the floating body 40. In figure 6 and 8 it is disclosed how this rubber sealing member 60, 83 on top of the indent 54 helps in sealing the opening 42 of the internal cavity 41 of the air vent head when the floating body 40 has been lifted up to the opening 42.

The rubber sealing member 60, 83 may be arranged as a ring shaped piece of rubber, wherein an outer side face of the ring shaped rubber sealing member is arranged with a V shaped cut out 84. As disclosed in figure 6 or 8, the upper section of the rubber in the V shaped rubber sealing member 84 will have a tension force from the rubber that will push this part of the V shaped rubber sealing member 84 towards a part of the roof of the internal cavity 41 surrounding the opening 42 thereby sealing the cavity 41 completely from the opening 42.

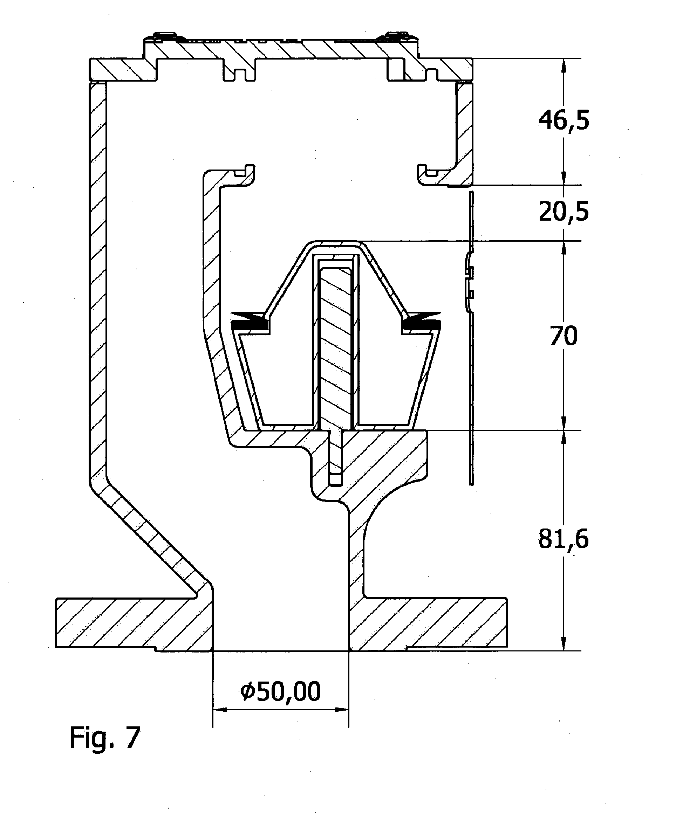

It has also turned out that arranging the V shaped rubber sealing member 84 on the top surface of the indent 54 of the floating member 40 also increases the turbulent effect (i.e. increases the Reynold number further) compared with a situation where it is only the sharp edge 55 of the indent 54 that provides the turbulent effect. In figure 7 there is depicted an example of embodiment of the present invention comprising some non-limiting examples of physical dimensions of the air vent head. These dimensions given in cm are comparable with the dimensions found in the prior art example of air vent head WIN2000. In the example of embodiment as illustrated in figure 7 the air speed limit for proper operation of the air vent head has been measured to be 40m/s.

Figure 8 illustrates an example of embodiment of a floating body 40 that is for example used in the example of embodiment of an air vent head according to the present invention that is disclosed in figures 3, 4, 5, 6 and 7. According to this example, the shape of the body is looking like a cylinder shaped body but with a smaller radius of the bottom surface, wherein the radius of the cylinder gradually increases upwards towards the sharp edge 55 of the indent 54. The size of the indent 54, i. e. how far inward towards a centre line of the floating body the indent should go is of less importance for inducing the turbulence. However, when the floating body 40 is lifted and is supposed to seal the opening 42 in the roof of the internal cavity 41, it is obvious that the size of the indent should resemble the diameter of the opening 42. By proper alignment of these parameter values the rubber sealing will be kept in place and provide a best possible sealing effect. The shape of the floating body 40 above the indent 54 is a conical type of shape. The shape is primarily dictated by the fact that there is an opening 80 from the bottom side 81 of the floating body providing space and guiding means for a rod 50 extending from the bottom surface of the cavity 41. When the floating body 40 is lifted, or air streams pushes on the floating body, this arrangement provides a stabilization of the floating body inside the cavity 41, for example maintaining the space between the walls of the cavity 41 and the side surfaces of the lower section of the floating body 40 as depicted in figure 5. The smaller radius of the bottom surface 81 of the floating body 40 in this example of embodiment provides a less chance that unwanted air may come under the bottom surface and start an unwanted lifting of the floating body. The circumference of the floating body 40 may for example increase gradually from the bottom side 81 up to the edge 55 of the indent 54.

However, the sharp edge 55 of the indent 54 is not the only means for inducing turbulence in the air stream passing the indent 54. It is possible to use any form of carvings, holes, grooves, cut outs etc. in the side surface of the floating body 40. This may also provide different solution to the shape and form of for example a rubber sealing used for sealing the opening 42.

The technical features of respective embodiments of the floating body is that they must have a proper buoyancy when submerged in water in addition to an upper section inducing a turbulence above and around this upper section of the floating body 40. However, it is within the scope of the present invention that a turbulence inducing arrangement alternatively may be located on a wall of the cavity 41 of the air vent head the floating body 40 is operational located in as long as the turbulence is induced in the space of the cavity 41 around the upper section 56 of the floating body 40.

It is also a requirement that the turbulent part of the air stream must be induced in a space arranged in the air vent head between the upper section of the floating body 40 and an inlet/outlet opening in fluid communication with for example a ballast tank. Further, the floating body 40 should be able to provide a sealing of the inlet/outlet opening in fluid communication with the ballast tank.

## Claims

1. An air vent head comprising a first opening (31) in fluid communication with open air surrounding the air vent head, a second opening (32) in fluid communication with a closed tank, wherein a cavity (41) inside the air vent head is providing controlled fluid communication between the first opening (31) and the second opening (32) dependent on a position inside the cavity (41) of a floating body (40), **characterized in that** the floating body (40) comprises an upper section (56) and a lower section (52), wherein the lower section (52) of the floating body (40) is facing towards the first opening (31), wherein the second section (56) is facing towards an opening (42) arranged in a top surface of the cavity (41) of the floating body (40), wherein the opening (42) provides a fluid communication channel between the cavity (41) and the second opening (32), a surface of the lower section (52) is arranged to provide a lower value of the Reynold number for air flows passing the lower section (52) of the floating body (40) while there is arranged a turbulence inducing arrangement in operational contact with the upper section (56) of the floating body (40) providing an increase of the Reynold number in air flows passing from the lower section (52) via the upper section (56) into a part of the cavity (41) surrounding the upper part (56) of the floating body (40).

2. The air vent head according to claim 1, wherein the turbulence inducing arrangement comprises an indent (54) in a side face of the floating body (40), wherein the indent (54) is facing towards air streaming from the lower section (52), and wherein a sharp edge (55) of the indent (54) induces turbulence.

3. The air vent head according to claim 1, wherein side walls of the cavity (40) surrounding the lower section (52) of the floating body (40) is arranged in parallel with a defined distance from the surface of the lower section (52) of the floating body (40).

4. The air vent head according to claim 1, wherein the turbulence inducing arrangement is an integrated part of the surface of the upper section (56) of the floating body (40).

5. The air vent head according to claim 1, wherein the turbulence inducing arrangement is arranged as an integrated part of walls of the cavity (40) surrounding the upper section (56) of the floating body (40).

6. The air vent head according to claim 1, wherein the first opening (31) is facing downwards towards a surface the air vent head is attached to.

7. A floating body (40) for use in an air vent head according to any claim 1 to 5, **characterized in that** the floating body (40) comprises an opening (80) in a bottom surface (81) of the floating body (40) providing a track in a length direction of the floating body (40) for a guiding rod (50), wherein the floating body (40) is hollow providing buoyancy for the floating body (40), a circumference of the bottom surface (81) of the floating body (40) is less than the circumference at an edge (55) of an indent (54) having a surface arranged perpendicular to the length direction of the floating body (40), the outer shape of the floating body (40) continues upward in the length direction of the floating body (40) from the indent (54) as a cone shaped body arranged symmetrically around the track provided for by the opening (80).

8. The floating body (40) according to claim 7, comprising a rubber sealing member (60, 83) arranged on a top side of the surface of the indent (54).

9. The floating body (40) according to claim 8, wherein the rubber sealing member (60, 83) is arranged with a V shaped cut out (84) along a side surface of the rubber sealing member (60, 83).

10. The floating body (40) according to claim 7, wherein the edge (55) of the indent (54) comprises a plurality of cut outs inducing turbulence in air streaming over the edge (55).

11. The floating body (40) according to claim 7, comprising a plurality of grooves that are arranged around the circumference of the floating body (40) adjacent to the edge (55) of the indent (54).

## Patentansprüche

1. Entlüftungskopf, umfassend eine erste Öffnung (31) in Fluidverbindung mit den Entlüftungskopf umgebender frischer Luft, einer zweiten Öffnung (32) in Fluidverbindung mit einem geschlossenen Tank, wobei ein Hohlraum (41) im Inneren des Entlüftungskopfes in Abhängigkeit von einer Position im Inneren des Hohlraums (41) eines Schwimmkörpers (40) eine gesteuerte Fluidverbindung zwischen der ersten Öffnung (31) und der zweiten Öffnung (32) bereitstellt, **dadurch gekennzeichnet, dass** der Schwimmkörper (40) einen oberen Abschnitt (56) und einen unteren Abschnitt (52) umfasst, wobei der untere Abschnitt (52) des Schwimmkörpers (40) gegenüber der ersten Öffnung (31) liegt, wobei der zweite Abschnitt (56) gegenüber einer Öffnung (42) liegt, die in der oberen Fläche des Hohlraums (41) des Schwimmkörpers (40) angeordnet ist, wobei die Öffnung (42) einen Fluidverbindungskanal zwischen dem Hohlraum (41) und der zweiten Öffnung (32) bereitstellt, wobei eine Fläche des unteren Abschnitts (52) zum Bereitstellen eines niedrigeren Werts der Reynolds-Zahl für durch den unteren Abschnitt (52) des Schwimmkörpers (40) passierende Luftströme angeordnet ist, wobei eine Turbulenz verursachende Anordnung in operationellem Kontakt mit dem oberen Abschnitt (56) des Schwimmkörpers (40) angeordnet ist und einen Anstieg der Reynolds-Zahl für Luftströme bereitstellt, die von dem unteren Abschnitt (52) über den oberen Abschnitt (56) in einen Teil des Hohlraums (41) strömen, der den oberen Teil (56) des Schwimmkörpers (40) umgibt.

2. Entlüftungskopf nach Anspruch 1, wobei die Turbulenz verursachende Anordnung eine Vertiefung (54) in einer Seitenfläche des Schwimmkörpers (40) umfasst, wobei die Vertiefung (54) Luft zugekehrt ist, die aus dem unteren Abschnitt (52) strömt, und wobei eine scharfe Kante (55) der Vertiefung (54) Turbulenz verursacht.

3. Entlüftungskopf nach Anspruch 1, wobei die den unteren Abschnitt (52) des Schwimmkörpers (40) umgebenden Seitenwände des Hohlraums (41) parallel zu einem festgelegten Abstand zur Fläche des unteren Abschnitts (52) des Schwimmkörpers (40) angeordnet sind.

4. Entlüftungskopf nach Anspruch 1, wobei die Turbulenz verursachende Anordnung einstückig mit der Fläche des oberen Abschnitts (56) des Schwimmkörpers (40) ausgebildet ist.

5. Entlüftungskopf nach Anspruch 1, wobei die Turbulenz verursachende Anordnung einstückig mit den den oberen Abschnitt (56) des Schwimmkörpers (40) umgebenden Wänden des Hohlraums (41) ausgebildet ist.

6. Entlüftungskopf nach Anspruch 1, wobei die erste Öffnung (31) nach unten zu einer Fläche weist, an der der Entlüftungskopf befestigt ist.

7. Schwimmkörper (40) zur Verwendung in einem Entlüftungskopf nach einem der Ansprüche 1 bis 5,
**dadurch gekennzeichnet, dass** der Schwimmkörper (40) eine Öffnung (80) in einer Bodenfläche (81) des Schwimmkörpers (40) umfasst, die eine Spur in einer Längsrichtung des Schwimmkörpers (40) für einen Führungsstab (50) bereitstellt, wobei der Schwimmkörper (40) hohl ist und dadurch den Auftrieb des Schwimmkörpers (40) bereitstellt, wobei ein Umfang der Bodenfläche (81) des Schwimmkörpers (40) kleiner ist als der Umfang an einer Kante (55) einer Vertiefung (54) mit einer rechtwinklig zu der Längsrichtung des Schwimmkörpers (40) angeordneten Fläche, wobei sich die Außenform des Schwimmkörpers (40) in der Längsrichtung des Schwimmkörpers (40) von der Vertiefung (54) aus als kegelförmiger Körper, der symmetrisch um die durch die Öffnung (80) bereitgestellte Spur angeordnet ist, nach oben fortsetzt.

8. Schwimmkörper (40) nach Anspruch 7, umfassend ein Abdichtelement (60, 83) aus Gummi, das an einer Oberseite der Fläche der Vertiefung (54) angeordnet ist.

9. Schwimmkörper (40) nach Anspruch 8, wobei das Abdichtelement (60, 83) aus Gummi mit einem v-förmigen Ausschnitt (84) entlang einer Seitenfläche des Abdichtelements (60, 83) angeordnet ist.

10. Schwimmkörper (40) nach Anspruch 7, wobei die Kante (55) der Vertiefung (54) eine Mehrzahl von Ausschnitten umfasst, die Turbulenz in über die Kante (55) strömende Luft verursachen.

11. Schwimmkörper (40) nach Anspruch 7, umfassend eine Mehrzahl von Nuten, die um den Umfang des Schwimmkörpers (40) neben der Kante (55) der Vertiefung (54) angeordnet sind.

## Revendications

1. Tête d'évent comprenant une première ouverture (31) en communication fluide avec l'air libre entourant la tête d'évent, une deuxième ouverture (32) en communication fluide avec un réservoir fermé, dans laquelle une cavité (41) à l'intérieur de la tête d'évent permet une communication fluide contrôlée entre la première ouverture (31) et la deuxième ouverture (32) en fonction d'une position à l'intérieur de la cavité (41) d'un corps flottant (40), **caractérisée en ce que** le corps flottant (40) comprend une section supérieure (56) et une section inférieure (52), dans laquelle la section inférieure (52) du corps flottant (40) est orientée face à la première ouverture (31), dans laquelle la deuxième section (56) est orientée face à une ouverture (42) disposée dans une surface supérieure de la cavité (41) du corps flottant (40), dans laquelle l'ouverture (42) forme un canal de communication fluide entre la cavité (41) et la deuxième ouverture (32), une surface de la section inférieure (52) est disposée de manière à ce que la valeur du nombre de Reynolds soit plus basse pour les flux d'air passant devant la section inférieure (52) du corps flottant (40) alors qu'une disposition induisant une turbulence est disposée en contact opérationnel avec la section supérieure (56) du corps flottant (40), faisant augmenter le nombre de Reynolds dans les flux d'air passant de la section inférieure (52) via la section supérieure (56) vers l'intérieur d'une partie de la cavité (41) entourant la partie supérieure (56) du corps flottant (40).

2. La tête d'évent selon la revendication 1, dans laquelle la disposition induisant une turbulence comprend une échancrure (54) dans une face latérale du corps flottant (40), dans laquelle l'échancrure (54) est orientée face à l'air s'écoulant depuis la section inférieure (52), et dans laquelle une arête (55) vive de l'échancrure (54) induit une turbulence.

3. La tête d'évent selon la revendication 1, dans laquelle des parois latérales de la cavité (40) entourant la section inférieure (52) du corps flottant (40) sont disposées en parallèle à une distance définie de la surface de la section inférieure (52) du corps flottant (40).

4. La tête d'évent selon la revendication 1, dans laquelle la disposition induisant une turbulence fait partie intégrante de la surface de la section supérieure (56) du corps flottant (40).

5. La tête d'évent selon la revendication 1, dans laquelle la disposition induisant une turbulence est disposée pour faire partie intégrante des parois de la cavité (40) entourant la section supérieure (56) du corps flottant (40).

6. La tête d'évent selon la revendication 1, dans laquelle la première ouverture (31) est orientée vers le bas face à une surface sur laquelle est fixée la tête d'évent.

7. Corps flottant (40) destiné à être utilisé dans une tête d'évent selon l'une quelconque des revendications 1 à 5, **caractérisé en ce que** le corps flottant (40) comprend une ouverture (80) dans une surface inférieure (81) du corps flottant (40) formant une rainure dans le sens de la longueur du corps flottant (40) pour une tige de guidage (50), dans lequel le corps flottant (40) est creux pour donner une flottabilité au corps flottant (40), une circonférence de la surface inférieure (81) du corps flottant (40) est inférieure à la circonférence au niveau d'une arête (55) d'une échancrure (54) dont une surface est disposée perpendiculairement au sens de la longueur du corps flottant (40), la forme extérieure du corps flottant (40) se poursuit vers le haut dans le sens de la longueur du corps flottant (40) depuis l'échancrure (54) sous la forme d'un corps conique disposé symétriquement autour de la rainure formée par l'ouverture (80).

8. Le corps flottant (40) selon la revendication 7, comprenant un élément d'étanchéité en caoutchouc (60, 83) disposé sur une face supérieure de la surface de l'échancrure (54).

9. Le corps flottant (40) selon la revendication 8, dans lequel l'élément d'étanchéité en caoutchouc (60, 83) possède une découpe en forme de V (84) le long d'une surface latérale de l'élément d'étanchéité en caoutchouc (60, 83).

10. Le corps flottant (40) selon la revendication 7, dans lequel l'arête (55) de l'échancrure (54) comprend plusieurs découpes induisant une turbulence dans l'air s'écoulant sur l'arête (55).

11. Le corps flottant (40) selon la revendication 7, comprenant plusieurs gorges disposées autour de la circonférence du corps flottant (40) adjacentes à l'arête (55) de l'échancrure (54).
